# EUROPEAN PATENT SPECIFICATION

(11) **EP 1 562 305 B1**
(45) Date of publication and mention of the grant of the patent: **22.07.2015**
(21) Application number: 03775041.1
(22) Date of filing: 13.11.2003
(51) Int. Cl.: H04W 8/00, H04W 84/18

(54) **A METHOD FOR ESTABLISHING A TIME DIVISION AND DUPLEX SELF-ORGANIZING MOBILE COMMUNICATION SYSTEM**
VERFAHREN ZUR EINRICHTUNG EINESZEITMULTIPLEX- UND DUPLEX-SELBSTORGANISATIONS-MOBILKOMMUNIKATIONSSYSTEM
PROCEDE D'ETABLISSEMENT D'UN SYSTEME DE COMMUNICATION MOBILE AUTO-ORGANISATEUR, DUPLEX, A PARTITION DANS LE TEMPS

(30) Priority: 13.11.2002 CN 02148624
(43) Date of publication of application: 10.08.2005
(73) Proprietor: China Academy of Telecommunications Technology, Haidian District Beijing 100191 (CN)
(72) Inventor: LI, Feng, Hai Dian District, Beijing 100083 (CN); LI, Shihe, Hai Dian District, Beijing 100083 (CN); YANG, Guiliang, Hai Dian District, Beijing 100083 (CN)
(74) Representative: Isarpatent
(86) International application number: PCT/CN2003/000962
(87) International publication number: WO 2004/066519

(56) References cited:
- WO-A1-00/25449
- DE-C1- 10 064 978
- JP-A- 2002 300 664
- US-A- 5 652 752
- US-A1- 2001 024 955
- US-B1- 6 185 412
- US-B1- 6 310 543

## Description

### Field of the Technology

The present invention relates to the technology in time-division duplex mobile communication systems, and more particular, to a method for constructing a self-organizing network system or an emergency communication system, concerning the application of commercial terminals in emergency systems.

### Background of the Invention

In the third-generation mobile communication system, the users can perform high-rate data communication while moving in high speed. However, under some circumstances, due to the impact of geographical environment etc, it is impossible (or very difficult) to erect optical cable links or electric cable links between base stations and base station controller, leading to impossibility of constructing mobile communication system; under other circumstances, because of war or natural disasters such as earthquake or flood, optical cable links or electric cable links already erected between base stations and base station controller may be destroyed, paralyzing the whole wireless mobile communication system at the time when people most need a communication system.

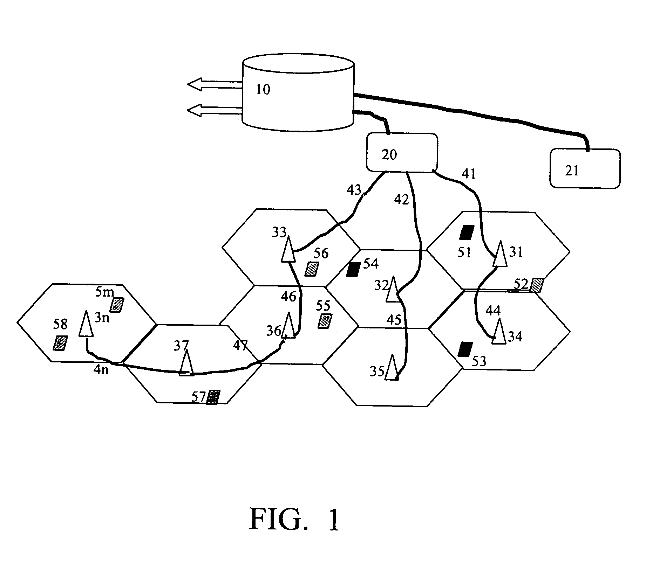

Figure 1 shows the network architecture of an existing public mobile communication system. At present, all public mobile communication systems are constructed according to the architecture illustrated in Fig. 1.

In figure 1, base stations are denoted as triangles with n base stations altogether denoted as 31, 32, 33, 34, 35, 36, 37 and 3n, respectively; while base station controllers (or radio network controllers) are denoted as rectangles with denoted as 20 and 21 respectively. The n base stations and the base station controller 20 in figure 1 are cable-connected (optical cable or electric cable) or wirelessly connected, as is shown in the figure with real lines 41, 42, 43, 44, 45, 46, 47 and 4n. Diamond oblique frames in the figure denote m user terminals as 51, 52, 53, 54, 55, 56, 57, 58 and 5m.

Each user terminal is wirelessly connected to a base station, then accesses to the core network 10 through the base station controller 20, thus establishing links with other terminals or other users outside the local network and realizing communications. Obviously, if a connection between a base station and the base station controller is disconnected, for example, 44, those user terminals covered by the corresponding base station 34 will be unable to get communication service.

It is obviously of particular importance at this time to have an emergency communication system with mobility and fast self-organizing network, and this is exactly the concept of a self-organizing mobile communication system. Generally, self-organizing mobile communication systems are all special systems and require special user terminals, which accordingly increase the cost, and make common citizens inconvenient to enjoy mobile communications under special circumstances.

If it requires commercial terminals instead of special terminals, such an emergency communication system will be able to provide communications with outside for common citizens, breaking the constraints of previous emergency communication systems, decreasing the cost of terminals, and making it possible for common citizens to enjoy mobile communication service. Under special circumstances, it is much more likely for those in emergency to survive with such emergency communication system available.

US Pub. No. 2001/0024955 A1 provides a method of routing and connection in a mobile radio system. Radio links are used instead of land line phone links to link cell sites to various destinations, where each node maintains a routing table for making decision for subsequent radio links.

US Pat No. 5652752 provides a mobile radio communication system where base stations perform as master base stations and slave master stations in turn to reuse frequency channel and to avoid interference.

WO 00/25449 provides a method for synchronizing terminals in a radio link system so that transmit period of any of terminals in a terminal group does not overlap with the receive period of any of the terminals in the group, thus allowing a set of closely located terminals to use a single channel.

### Summary of the Invention

The purpose of the present invention is to provide a method for constructing a time-division duplex self-organizing mobile communication system, which uses international standards for mobile communications with only those for base stations and Radio Resource Management (RRM) modified so as to make the mobile communication service available to users with only terminals accessible to common public networks, and to lower network-constructing cost and promote wide-spread applications.

The invention is set forth in the independent claim. Embodiments of the invention are defined in the dependent claims.

The technical solution to serve the purpose of the present invention is as follows: a method for constructing a time-division duplex self-organizing mobile communication system, comprising:
A. Searching for pilot signals of adjacent area base stations in a manner similar to user terminals by a first base station without direct connection to a base station controller, setting the local area covered by the first base station as the next lower-level area of the adjacent area through responding to the pilot signals by the first base station through performing random accessing as a user terminal so as to form a subordinate relationship to the adjacent area, wherein, the adjacent area base station is a second base station which is either a first-level area base station with direct connection to the base station controller or a second or below-second-level area base station without direct but relayed connection to the base station controller;
B. Conducting relay communications by base stations at each above level, wherein the relay communication starting from a second or below-second-level area base station by a commercial user terminal covered by the second or below-second-level area base station, eventually establishing communications between the commercial user terminal and the base station controller in a public mobile communication system via a first-level area base station directly connected with the base station controller, and constructing a self-organizing mobile communication system by the base stations at each level.

Wherein the conducting relay communications is:
Conducting communication with multi time slot frame structure, wherein, the uplink frame and downlink frame structure of each time slot is set by the system: at least one pair of receiving time slot and sending time slot in the first-level area base station are used to exchange information with the next lower-level area base station, at least one pair of receiving time slot and sending time slot in the first-level area base station are used to exchange information with the common commercial user terminals covered by the first-level area base station; at least one pair of receiving time slot and sending time slot in a second or below-second-level area base station are used to exchange information with the next upper-level area base station and at least one pair of receiving time slot and sending time slot to exchange information with the common commercial user terminals covered by the second or below-second-level area base station, as well as one pair of receiving time slot and sending time slot are used to exchange information with its next lower-level area base station given that the second or below-second-level area base station is not a lowest-level area base station.

Wherein the step A comprises:
the first base station responding according to the magnitudes of the Signal Noise Ratio (SNR) of the pilot signals when receiving more than one pilot signals; the network side determines the subordinate relationship to the adjacent area.

Wherein the conducting relay communications is:
Conducting relay communications in the mode of high modulation, such as Quaternary Phase Shift Keying (QPSK) or 16 Quadrature Amplitude Modulation (16QAM).

The system-constructing method of the present invention is a new one for constructing a self-organizing mobile communication system based on the third-generation mobile communication standard Time Division-Synchronous Code Division Multiple Access (TD-SCDMA), wherein:
1. The constructed system is mobile, for example, a base station on board vehicle, which may be erected anytime and anywhere;
2. The constructed system is self-organizing, a wireless mobile communication network can be constructed automatically through intercommunications between a number of base stations once their locations are determined, while some nodes in this network are connected with the base station controller through optical cable or electric cable links.
3. Commercial TD-SCDMA terminals may communicates with the outside through this system.

Therefore, the method of the present invention is especially suitable for constructing emergency communication systems.

The system constructed with the method of the present invention is of the following benefits:
1. Since the system can be constructed with board a board vehicle, an emergency communication system may be readily constructed under special circumstances such as war, earthquake or flood.
2. There is no requirement for special terminal devices and users can communicate with the outside by utilizing common commercial terminals (So far no emergency communication system can implement communication with the outside utilizing common commercial terminals).

### Brief Description of the Drawings

Figure 1 shows a schematic diagram of the network architecture of a public mobile communication system;
Figure 2 shows a schematic diagram of the network architecture of a self-organizing mobile communication system presented by the present invention;
Figure 3 shows the frame structure used in a self-organizing network based on TD-SCDMA, including the frame structure of a TD-SCDMA system shown in Figure 3A, the frame structure of a parent base station in a self-organizing system shown in Figure 3B, and the frame structure of a second-level area base station in a self-organizing system shown in Figure 3C.

### Embodiments of the Invention

Now, the present invention will be described in detail with reference to the accompanying drawings.

The embodiments of the present invention are mainly with time-division duplex mobile communication systems. Now take TD-SCDMA, one of the three third-generation mobile communication standards, for example, the technical solution to modify space interface of TD-SCDMA will be presented. With proper changes, this technical solution may also be used as standards for other time-division duplex mobile communication systems.

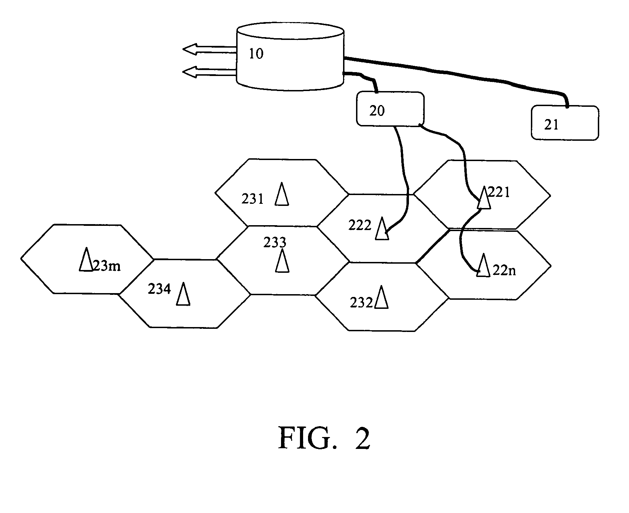

Shown in Figure 2 is the basic network architecture of a self-organizing mobile communication system of the present invention. Some base stations in the system (n in number), such as 221, 222 and 22n, are either cable-connected or wirelessly connected with the base station controller 20 (direct connection) in the same way as in Figure 1. These base stations are referred to as parent base station or first-level area base station. Other base stations (m in number), however, are not able to get direct connects with the base station controller 20, such as 231, 232, 233, 234 and 23m. These base stations can be of fixed positions, or vehicle-mounted ones.

With the method of the present invention, base stations that are not directly connected with the base station controller 20, such as 231, may perform, through the use of space interface signaling and service signal transmission, a direct wireless relay communication with a parent or first-level area base station such as 222, or, a base station without direct connection with the base station controller 20, such as 234, may first perform relay communication with another base station also without direct connection with the base station controller 20, such as 233, then perform relay communication with a parent base station like 222 through the base station 233, so that the user terminals in the covering areas of base stations 233 and 234 will be fully operative and perform communication with the base station controller 20.

As shown in figure 2, let us suppose that the covering area of each base station is hexagonal (sectorial, circle or other shapes). A cellular network then may be constructed by the base stations not directly connected to the base station controller. In the schematic diagram, since base stations 221, 222 and 22n are directly connected to the base station controller 20, the areas covered by them are referred to as first-level areas, wherein the signals are transferred in the air only once when the user terminals in the areas are communicating with the base station controller 20. Since user terminals in the areas covered by the base stations 231 and 232 have to first transmit information to the base stations of first-level areas through space interfaces, and then communicate with the base station controller 20 via first-level base stations, these areas are referred to as second-level areas, such as the areas 231, 232 and 233, wherein the signals are transmitted twice in the air when user terminals in the areas are communicating with the base station controller 20. Likewise, if the signals are transmitted three times in the air when a user is communicating with the base station controller 20, the area where the user is located will be referred to as a third-level area, such as the area 234. If the signals are transferred four times in the air when a user is communicating with the base station controller 20, the area where the user is located will be referred to as a fourth-level area, such as the area 23m, and the rest may be deduced in the same manner.

Presented next is the constructing process of a self-organizing mobile communication system, which is summarized in three main steps:
Step 1: constructing the self-organizing network system.

When the connection (e.g. Iub interface) between the base station controller 20 and a base station, such as base station 222 in figure 2, is disconnected, or when a mobile base station without direct connection to the base station controller 20, such as base station 233, arrives at the prearranged location and is available, the base station 222 in the former situation and 233 in the latter situation will both work as a user terminal, searching for pilot signals of adjacent base stations, the process of which is the same as that of the local searching of a user terminal.

When the base station 222 receives the pilot signals from a base station in an adjacent area, like 221, it will preset itself as second-level area, and respond to the pilot signal of the first-level area (area covered by the adjacent base station 221). If the base station 222 receives more than one pilot signals, the base stations sending these pilot signals may all become upper-level area base station 222. As base station 222 cannot determine by itself which one will be its upper-level area base station, base station 222 will respond to each pilot signal according to the SNR magnitude of the received pilot signals, and finally it is the network side that will determine the subordinate relationship between the base stations. This process of response is like the random accessing process of a user terminal, only the signaling is different.

The first-level base station 221 may designate the area covered by the base station 222 as its sub-area (second-level area) after establishing communications with the base station 222. The second-level base station (like 231), if found as a parent base station by a base station like 233, will designate the area covered by 233 as its sub-area (third-level area), and the rest may be deduced in the same manner. Each sub-area may have only one parent area. Above-second-level areas may have either one sub-area, a number of sub-areas or none at all.

Step 2: determining the frame structure of the time slot in uplink and downlink communications of the base stations at the first level and each other level.

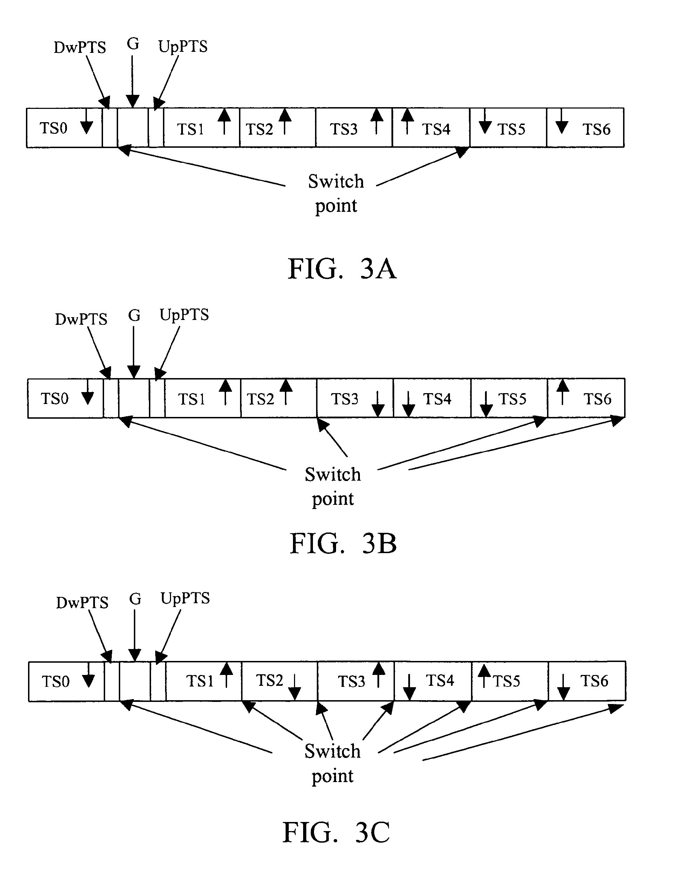

Since the technical solution of the present invention is applied to time-division duplex mobile communication system, multi time slot structure is required for communications of this kind of system. Furthermore, both uplink and downlink frame structure of each time slot can be set by the system. Taking TD-SCDMA standard as an example, whose frame structure is shown in figure 3A. The frame is comprised of 7 main time slot TS0, TS1, ..., TS6 with some special time slots set between TS0 and TS1, namely Downlink Pilot Time Slot (DwPTS), Uplink Pilot Time Slot (UpPTS), and guard time slot G.

In the constructed self-organizing network, definitions of TS0, TS1, TS4 and special time slots in the system frame structure for all areas (including parent areas and sub-areas at each level) are completely the same as those defined in TD-SCDMA standard.

As is shown in Figure 3B, however, for first-level areas (parent base stations), TS2 in the system frame structure is a receiving time slot while TS5 is a sending time slot, and this pair of time slots are used for communicating with second-level areas (Communication between a parent base station and the base station controller is performed in either wire or wireless manner), other time slots are used for exchanging information with common commercial user terminals in the areas which they covered.

As for second-level areas, with reference to Figure 3C, TS5 in the system frame structure is a receiving time slot while TS2 is a sending time slot, and this pair of time slots are used for communicating with the first-level base stations; TS3 in the system frame structure is a receiving time slot while TS6 is a sending time slot, and this pair of time slots are used for communicating with the third-level base station. Other time slots are used for exchanging information with common commercial user terminals in the areas which the second-level area base stations cover.

As for third-level areas, TS6 is a receiving time slot while TS3 is a sending time slot, and this pair of time slots are used for communicating with second-level area base stations; TS2 is a receiving time slot while TS5 is a sending time slot, and this pair of time slots are used for communicating with fourth-level area base stations. Other time slots are used for exchanging information with common commercial user terminals in the areas the third-level area base stations cover. The rest may be deduced accordingly with levels extending. However, with the increasing of times of signal transmitting in the air, time delay will increase as well, leading to poorer communication, which is thus not recommended.

As for areas at the last level, since there is no need to exchange information with the lower-level area base station, no corresponding time slots are assigned. All time slots except the pair assigned for exchanging information with the next upper-level area base station may be used to exchange information with common commercial user terminals in the corresponding area.

With the system frame structure set as above, TS1 and TS4 are used for communication between mobile terminals and base stations in the areas at each level; TS2, TS3, TS5 and TS6 are used for exchanging information between upper and lower level area base stations, or may be used for communication between mobile terminals and base stations in the areas at each level (depending on the network organized). Finally, mobile terminals in any area will be able to establish communication with the system controller.

Step 3: modifying the radio resource manager (base station and base station controller).

When a time-division duplex system for public mobile communication is involved in the self-organizing mobile communication system of the present invention, there will be new requirements as follows for system's RRM (Radio Resource Management):
1. For all areas, only some uplink and downlink time slots are used for communication between the local base station and user terminals since other uplink and downlink time slots will be used for communication between the local base station and base stations at the upper or lower level. For instance, with the TD-SCDMA standards, only one pair, at most two pairs of time slots may be used for providing service, namely, an area with single carrier wave can support 16 to 32 users at most. When larger user capacity is required, multi carrier wave has to be utilized.
2. Since the transmission condition between base stations is much better than that between a base station and a user terminal, communication between base stations at different levels can be performed through high modulation mode, such as QPSK or 16QAM. In particular, with a TD-SCDMA system in use, transmitting power may be greatly reduced while transmission capability is improved since all base stations employ intelligent antenna. As each code channel of time slot can be dynamically allocated according to capacity requirement of areas at different levels, it is possible for the time slots used for communication between two base stations to provide connects for a number of lower-level area base stations.
3. Each base station provides exchange service for communication between local users. Therefore, only signaling is required to transmit to the system in communication between local users while no service data required, which will greatly reduce the requirement for radio channels in space, thus increasing system capacity.

As shown in figure 3A, in order to make common commercial terminals communicate with the outside through the emergency communication system, TS0, TS1, TS4 and special time slots in the system frame structure are completely the same as those defined in the TD-SCDMA standard.

Since base stations need to communicate with one another, it is no longer the case as defined in the TD-SCDMA standard that there are only two receiving/sending switching points in the system frame structure (as is shown in figure 3A). Instead, there may appear a number of them as in the frame structure of a parent base station of the self-organizing system shown in figure 3B and in the frame structure of a second-level area base station shown in figure 3C. In figures 3A, 3B and 3C, the upward arrows in each time slot denote sending while downward arrows denote receiving. Switching points in the system frame structure of base stations at or below the third level may be deduced accordingly.

It is significant that intelligent antenna are employed in TD-SCDMA, therefore, base stations are systems with multi-antennas and communications between base stations can be performed by sending and receiving via multi-antennas technology, which will greatly increase SNR and improve transmission efficiency. For instance, time slots TS2, TS3, TS5 and TS6 can be modulated in the mode of 16QAM.

The self-organizing mobile communication system of the present invention is constructed based on time-division duplex mobile communication systems, especially based on TD-SCDMA third-generation mobile communication systems. By way of relay communication, it is made possible for user terminals within the area covered by a base station which is unable to link directly with the base station controller to communicate with the base station controller of the system. It is a useful extension of the third-generation mobile communication system, and is widely applicable to emergency communication and circumstance in which it is not easy to erect optical or electric cables.

## Claims

1. A method for constructing a time-division duplex self-organizing mobile communication system, the system comprising:
A. searching for pilot signals from an adjacent area base station (221) by a first base station (233) without direct connection to a base station controller (20) through performing local searching as a user terminal, setting the local area covered by the first base station as the next lower-level area of the adjacent area through responding to the pilot signals by the first base station through performing random accessing as a user terminal so as to form a subordinate relationship to the adjacent area, wherein, the adjacent area base station is a second base station (221)
which is either a first-level area base station with direct connection to the base station controller or a second or below-second-level area base station without direct but relayed connection to the base station controller;
B. conducting relay communications by base stations at each above level, wherein the relay communication starting from a second or below-second-level area base station (22n, 233) by a commercial user terminal covered by the second or below-second-level area base station, eventually establishing communications between the commercial user terminal and the base station controller in a public mobile communication system via a first-level area base station (221) directly connected with the base station controller, and constructing a self-organizing mobile communication system by the base stations at each level.

2. A method for constructing a time-division duplex self-organizing mobile communication system according to claim 1, wherein the conducting relay communications is:
conducting communication with multi time slot frame structure, wherein, the uplink frame and downlink frame structure of each time slot is set by the system: at least one pair of receiving time slot and sending time slot in the first-level area base station are used to exchange information with the next lower-level area base station, at least one pair of receiving time slot and sending time slot in the first-level area base station are used to exchange information with the common commercial user terminals covered by the first-level area base station; at least one pair of receiving time slot and sending time slot in a second or below-second-level area base station are used to exchange information with the next upper-level area base station and at least one pair of receiving time slot and sending time slot to exchange information with the common commercial user terminals covered by the second or below-second-level area base station, as well as one pair of receiving time slot and sending time slot are used to exchange information with its next lower-level area base station given that the second or below-second-level area base station is not a lowest-level area base station.

3. A method for constructing a time-division duplex self-organizing mobile communication system according to claim 1, wherein the step A comprises:
the first base station responding according to the magnitudes of the Signal Noise Ratio (SNR) of the pilot signals when receiving more than one pilot signals; the network side determines the subordinate relationship to the adjacent area.

4. A method for constructing a time-division duplex self-organizing mobile communication system according to claim 1, wherein the conducting relay communications is:
conducting relay communications in the mode of high modulation, such as Quaternary Phase Shift Keying (QPSK) or 16 Quadrature Amplitude Modulation (16QAM).

5. A method for constructing a time-division duplex self-organizing mobile communication system according to claim 1, wherein the first base station is a fixed position base station or a mobile vehicle-mounted system.

6. A method for constructing a time-division duplex self-organizing mobile communication system according to claim 1, wherein each lower-level area base station in the self- organizing mobile communication system has only one upper-level area base station while each upper-level area base station may have one lower-level area base station, more than one lower-level area base stations, or no lower-level area base station.

7. A method for constructing a time-division duplex self-organizing mobile communication system according to claim 1, wherein the direct connection including cable connection or wireless connection.

8. A method for constructing a time-division duplex self-organizing mobile communication system according to claim 1, wherein the base stations in the self-organizing mobile communication system implement multi-antenna systems and conduct intercommunications between base stations with the technology of sending and receiving through multi antennas.

## Patentansprüche

1. Verfahren zum Aufbauen eines selbstorganisierenden Zeitduplex-Mobilkommunikationssystems, wobei das System Folgendes umfasst:
A. Suchen nach Pilotsignalen von einer in einem Nachbargebiet befindlichen Basisstation (221) durch eine erste Basisstation (233) ohne direkte Verbindung zu einem Basisstations-Controller (20) durch Ausführen lokaler Suchen als ein Nutzergerät, und Einstellen des durch die erste Basisstation abgedeckten lokalen Gebietes als das Gebiet der nächst-niedrigeren Ebene des benachbarten Gebietes durch Antworten auf die Pilotsignale durch die erste Basisstation durch Ausführen von Zufallszugriffen als ein Nutzergerät, um eine untergeordnete Beziehung zu dem benachbarten Gebiet zu bilden, wobei die in einem Nachbargebiet befindliche Basisstation eine zweite Basisstation (221) ist, die entweder eine Basisstation eines Gebietes einer ersten Ebene mit direkter Verbindung zum Basisstations-Controller oder eine Basisstation eines Gebietes einer zweiten Ebene oder eines Gebietes unterhalb der zweiten Ebene ohne direkte, sondern mit verzögerter Verbindung zum Basisstations-Controller ist;
B. Ausführen einer Relaiskommunikation durch Basisstationen auf jeder Ebene darüber, wobei die Relaiskommunikation von einer Basisstation eines Gebietes einer zweiten Ebene oder eines Gebietes unterhalb der zweiten Ebene (22n, 233) durch ein kommerzielles Nutzergerät beginnt, das durch die Basisstation eines Gebietes einer zweiten Ebene oder eines Gebietes unterhalb der zweiten Ebene versorgt wird, letztendliches Herstellen einer Kommunikation zwischen dem kommerziellen Nutzergerät und dem Basisstations-Controller in einem öffentlichen Mobilkommunikationssystem über eine Basisstation eines Gebietes einer ersten Ebene (221), die direkt mit dem Basisstations-Controller verbunden ist, und Aufbauen eines selbstorganisierenden Mobilkommunikationssystems durch die Basisstationen auf jeder Ebene.

2. Verfahren zum Aufbauen eines selbstorganisierenden Zeitduplex-Mobilkommunikationssystems nach Anspruch 1, wobei das Ausführen einer Relaiskommunikation Folgendes ist:
- Ausführen einer Kommunikation mit einer Mehrfachzeitschlitz-Framestruktur, wobei: die Uplink-Frame- und die Downlink-Framestruktur jedes Zeitschlitzes durch das System eingestellt wird; mindestens ein Paar aus Empfangszeitschlitz und Sendezeitschlitz in der Basisstation eines Gebietes einer ersten Ebene zum Austauschen von Informationen mit der Basisstation eines Gebietes der nächst-niedrigeren Ebene verwendet werden; mindestens ein Paar aus Empfangszeitschlitz und Sendezeitschlitz in der Basisstation eines Gebietes einer ersten Ebene zum Austauschen von Informationen mit den gemeinsamen kommerziellen Nutzergeräten verwendet werden, die durch die Basisstation des Gebietes der ersten Ebene versorgt werden; mindestens ein Paar aus Empfangszeitschlitz und Sendezeitschlitz in einer Basisstation eines Gebietes einer zweiten Ebene oder eines Gebietes unterhalb der zweiten Ebene zum Austauschen von Informationen mit der Basisstation eines Gebietes der nächst-höheren Ebene verwendet werden, und mindestens ein Paar aus Empfangszeitschlitz und Sendezeitschlitz zum Austauschen von Informationen mit den gemeinsamen kommerziellen Nutzergeräten verwendet werden, die durch die Basisstation eines Gebietes einer zweiten Ebene oder eines Gebietes unterhalb der zweiten Ebene versorgt werden, sowie ein Paar aus Empfangszeitschlitz und Sendezeitschlitz zum Austauschen von Informationen mit seiner Basisstation eines Gebietes der nächst-niedrigeren Ebene verwendet werden, unter dem Vorbehalt, dass die Basisstation eines Gebietes einer zweiten Ebene oder eines Gebietes unterhalb der zweiten Ebene keine Basisstation eines Gebietes der untersten Ebene ist.

3. Verfahren zum Aufbauen eines selbstorganisierenden Zeitduplex-Mobilkommunikationssystems nach Anspruch 1, wobei der Schritt A umfasst, dass:
- die erste Basisstation gemäß den Größenordnungen des Signal-Rausch-Verhältnisses (SNR) der Pilotsignale antwortet, wenn mehr als ein Pilotsignal empfangen wird; wobei die Netzseite die untergeordnete Beziehung zu dem benachbarten Gebiet bestimmt.

4. Verfahren zum Aufbauen eines selbstorganisierenden Zeitduplex-Mobilkommunikationssystems nach Anspruch 1, wobei das Ausführen einer Relaiskommunikation Folgendes ist:
- Ausführen einer Relaiskommunikation im Modus der hohen Modulation, wie zum Beispiel Quaternary Phase Shift Keying (QPSK) oder 16 Quadrature Amplitude Modulation (16QAM).

5. Verfahren zum Aufbauen eines selbstorganisierenden Zeitduplex-Mobilkommunikationssystems nach Anspruch 1, wobei die erste Basisstation eine Basisstation mit ortsfester Position oder ein in einem Fahrzeug montiertes Mobilsystem ist.

6. Verfahren zum Aufbauen eines selbstorganisierenden Zeitduplex-Mobilkommunikationssystems nach Anspruch 1, wobei jede Basisstation eines Gebietes einer niedrigeren Ebene in dem selbstorganisierenden Mobilkommunikationssystem nur eine einzige Basisstation eines Gebietes einer höheren Ebene hat, während jede Basisstation eines Gebietes einer höheren Ebene eine einzelne Basisstation eines Gebietes einer niedrigeren Ebene, mehr als eine Basisstation eines Gebietes einer niedrigeren Ebene oder keine Basisstation eines Gebietes einer niedrigeren Ebene hat.

7. Verfahren zum Aufbauen eines selbstorganisierenden Zeitduplex-Mobilkommunikationssystems nach Anspruch 1, wobei die direkte Verbindung eine Kabelverbindung oder eine drahtlose Verbindung umfasst.

8. Verfahren zum Aufbauen eines selbstorganisierenden Zeitduplex-Mobilkommunikationssystems nach Anspruch 1, wobei die Basisstationen in dem selbstorganisierenden Mobilkommunikationssystem Mehrantennensysteme implementieren und eine Kommunikation zwischen Basisstationen mit der Technologie des Sendens und Empfangens durch mehrere Antennen ausführen.

## Revendications

1. Procédé de construction d'un système de communication mobile auto-organisateur duplex à répartition dans le temps, le système comprenant :
A. rechercher des signaux pilotes à partir d'une station de base de zone adjacente (221) par une première station de base (233) sans liaison directe avec un contrôleur de station de base (20) en effectuant une recherche locale en tant que terminal d'utilisateur, définir la zone locale couverte par la première base station en tant que zone de niveau inférieur suivante de la zone adjacente en répondant aux signaux pilotes de la première station de base en effectuant un accès aléatoire en tant que terminal d'utilisateur de manière à former une relation de subordination à la zone adjacente, dans lequel, la station de base de zone adjacente est une seconde station de base (221) qui est soit une station de base de zone de premier niveau avec une liaison directe au contrôleur de station de base, soit une station de base de zone de second niveau ou inférieure au second niveau sans liaison directe, mais relayée au contrôleur de station de base ;
B. effectuer des communications de relais par des stations de base à chaque niveau supérieur, dans lequel les communications de relais partent d'une station de base de zone de second niveau ou inférieure au second niveau (22n, 233) par un terminal d'utilisateur commercial couvert par la station de base de zone de second niveau ou inférieure au second niveau, établir ensuite des communications entre le terminal d'utilisateur commercial et le contrôleur de station de base dans un système de communication mobile public par l'intermédiaire d'une station de base de zone de premier niveau (221) reliée directement au contrôleur de station de base, et construire un système de communication mobile auto-organisateur par les stations de base à chaque niveau.

2. Procédé de construction d'un système de communication mobile auto-organisateur duplex par répartition dans le temps selon la revendication 1, dans lequel effectuer des communications de relais comprend :
- effectuer une communication avec une structure de trame multi-intervalle de temps, dans lequel la structure de trame de liaison montante et de trame de liaison descendante de chaque intervalle de temps est définie par le système suivant : au moins une paire d'intervalle de temps de réception et d'intervalle de temps d'émission dans la station de base de zone de premier niveau sont utilisés pour échanger des informations avec la station de base de zone de niveau inférieur suivante, au moins une paire d'intervalle de temps de réception et d'intervalle de temps d'émission dans la station de base de zone de premier niveau sont utilisés pour échanger des informations avec les terminaux d'utilisateurs commerciaux ordinaires couverts par la station de base de zone de premier niveau ; au moins une paire d'intervalle de temps de réception et d'intervalle de temps d'émission dans une station de base de zone de second niveau ou inférieure au second niveau sont utilisés pour échanger des informations avec la station de base de zone de niveau supérieur suivante et au moins une paire d'intervalle de temps de réception et d'intervalle de temps d'émission pour échanger des informations avec les terminaux d'utilisateurs commerciaux ordinaires couverts par la station de base de zone de second niveau ou inférieure au second niveau, ainsi qu'une paire d'intervalle de temps de réception et d'intervalle de temps d'émission sont utilisés pour échanger des informations avec sa station de base de zone de niveau inférieur suivante étant donné que la station de base de zone de second niveau ou inférieure au second niveau n'est pas une station de base de zone de plus bas niveau.

3. Procédé de construction d'un système de communication mobile auto-organisateur duplex à répartition dans le temps selon la revendication 1, dans lequel l'étape A comprend :
- la première station de base répond en fonction des amplitudes du rapport signal sur bruit (SNR) des signaux pilotes lorsqu'elle reçoit plus d'un signal pilote ; le côté réseau détermine la relation de subordination à la zone adjacente.

4. Procédé de construction d'un système de communication mobile auto-organisateur duplex à répartition dans le temps selon la revendication 1, dans lequel effectuer des communications de relais comprend :
- effectuer des communications de relais dans le mode de modulation élevée, tel que la modulation par déplacement de phase quadrivalente (QPSK) ou la modulation d'amplitude en quadrature 16 (16QAM).

5. Procédé de construction d'un système de communication mobile auto-organisateur duplex à répartition dans le temps selon la revendication 1, dans lequel la première station de base est une station de base à position fixe ou un système monté sur un véhicule mobile.

6. Procédé de construction d'un système de communication mobile auto-organisateur duplex à répartition dans le temps selon la revendication 1, dans lequel chaque station de base de zone de niveau inférieur dans le système de communication mobile auto-organisateur a seulement une station de base de zone de niveau supérieur, tandis que chaque station de base de zone de niveau supérieur peut avoir une station de base de zone de niveau inférieur, plusieurs stations de base de zone de niveau inférieur, ou aucune station de base de zone de niveau inférieur.

7. Procédé de construction d'un système de communication mobile auto-organisateur duplex à répartition dans le temps selon la revendication 1, dans lequel la liaison directe comprend une liaison par câble ou une liaison sans fil.

8. Procédé de construction d'un système de communication mobile auto-organisateur duplex à répartition dans le temps selon la revendication 1, dans lequel les stations de base dans le système de communication mobile auto-organisateur mettent en oeuvre des systèmes multi-antenne et effectuent des intercommunications entre des stations de base avec la technologie d'émission et de réception par antennes multiples.
